# EUROPEAN PATENT APPLICATION

(11) **EP 4 706 402 A1**
(43) Date of publication of application: **11.03.2026**
(21) Application number: 24800055.6
(22) Date of filing: 11.04.2024
(51) Int. Cl.: A23L 2/00, A23D 9/00, A23L 2/52, A23L 2/385, A23L 5/00, A23L 23/00

(54) **LIQUID FOOD PACKAGED IN CONTAINER FOR SEVERAL LIQUIDS**

(30) Priority: 01.05.2023 JP 2023075545
(71) Applicant: Suntory Holdings Limited, Osaka-shi, Osaka 530-8203 (JP)
(72) Inventor: IKAWA, Yukie, Kawasaki-shi, Kanagawa 211-0067 (JP); TAKAHASHI, Amane, Kawasaki-shi, Kanagawa 211-0067 (JP); ASANO, Yu, Kawasaki-shi, Kanagawa 211-0067 (JP); MUTOH, Mari, Kawasaki-shi, Kanagawa 211-0067 (JP)
(74) Representative: Vossius & Partner Patentanwälte Rechtsanwälte mbB
(86) International application number: PCT/JP2024/014729
(87) International publication number: WO 2024/228324

(57) **Abstract**

The object of the present invention is to provide a food, in a liquid form packaged in a container, that is convenient, delicious, and made easy for regular consumption. The present invention provides a multi-liquid type liquid food, which includes (a) a liquid composition containing more than 70 wt.% of an oil and/or fat, and (b) a liquid composition, different from the liquid composition of (a) set forth above, having a viscosity from 1 to 2000 mPa·s. In the multi-liquid type liquid food, each of the liquid compositions is individually packaged.

## Description

### Technical Field

The present invention relates to a food in a liquid form packaged in a multi-liquid type container.

### Background Art

As a packaged food in which a plurality of liquid compositions is individually packaged, for example, a product in which ketchup and mustard are each filled in respective small portion packs, available from DISPEN PAK JAPAN CO., INC., is commercially available. In addition, Patent Literatures 1 to 3 each describe a food packaged in a container in which a plurality of liquid compositions is individually packaged.

### Citation List

### Patent Document

Patent Literature 1: JP 2002-051733 A
Patent Literature 2: WO 2019/131996
Patent Literature 3: WO 2019/131997

### Summary of Invention

### Technical Problem

In general, a food and/or a beverage is often used in an aqueous system, and when an oil and/or fat is contained in a food at a high concentration, mixing with another food may be difficult. In particular, in a food that is packaged in a container, a food that can be used quickly and conveniently can have an important commercial value, but the inclusion of an oil and/or fat at a high concentration may impair the commercial value.

In view of such circumstances, an object of the present invention is to provide a food in a liquid form packaged in a container, which can be used quickly and conveniently while containing an oil and/or fat at a high concentration.

### Solution to Problem

As a result of intensive studies on the above-described issues, the present inventors have found that even when a liquid composition contains an oil and/or fat at a high concentration, it is possible to provide an excellent food in a liquid form packaged in a container by using the liquid composition along with another liquid composition adjusted to have a specific viscosity, leading to completion of the present invention.

The present invention encompasses, but is not limited to, the following aspects.
[1] A food in a liquid form packaged in a container, the food including: (a) a liquid composition containing more than 70 wt.% of an oil and/or fat; and (b) a liquid composition, different from the liquid composition of (a) set forth above, having a viscosity from 1 to 2000 mPa·s, wherein each of the liquid compositions is individually packaged.
[2] The food according to [1], wherein the food is a beverage.
[3] The food according to [1] or [2], wherein the food is a concentrated beverage to be diluted for consumption.
[4] The food according to any of [1] to [3], wherein the food is for single use.
[5] The food according to any of [1] to [4], wherein the container is configured to release the liquid compositions of (a) and (b) simultaneously from the container.
[6] The food according to any of [1] to [5], wherein the container includes at least two or more liquid storage compartments for storing the liquid compositions of (a) and (b).
[7] The food according to [6], wherein a volume of each of the liquid storage compartments is 50 mL or less.
[8] The food according to any of [1] to [7], wherein a liquid ratio (a)/(b) is from 0.1 to 10.
[9] The food according to any of [1] to [8], wherein (a) includes a safflower oil, a sunflower oil, or an MCT oil.
[10] The food according to any of [1] to [9], wherein (a) includes a glycerin fatty acid ester.
[11] The food according to any of [1] to [10], wherein a viscosity of (a) is from 1 to 2000 mPa·s.
[12] The food according to any of [1] to [11], wherein a peroxide value of (a) is 10 or less.
[13] The food according to any of [1] to [12], wherein the liquid composition of (b) includes a flavoring and/or a fruit juice.
[14] The food according to any of [1] to [13], wherein a pH of (b) is 4 or less.

### Advantageous Effects of Invention

According to the present invention, even when a liquid composition contains an oil and/or fat at a high concentration, it is possible to obtain an excellent food in a liquid form packaged in a container by using the liquid composition along with another liquid composition adjusted to have a specific viscosity.

### Description of Embodiments

The present invention relates to a food in a liquid form packaged in a container including a plurality of liquid compositions, the food including: (a) a liquid composition containing more than 70 wt.% of an oil and/or fat; and (b) a liquid composition, different from the liquid composition of (a) set forth above, having a viscosity from 1 to 2000.

The food in a liquid form packaged in a container according to the present invention includes a plurality of liquid compositions, in which (a) the liquid composition containing more than 70 wt.% of an oil and/or fat and (b) the liquid composition different from the liquid composition of (a) set forth above are each individually packaged in separate liquid storage compartments so as not to be mixed with each other, and in a preferred aspect, the plurality of individually packaged liquid compositions are stored in one package. In general, when an oil and/or fat content is high, mixing may be difficult; however, when a liquid composition is made into a food that is packaged in a multi-liquid type container as in the present invention and used along with a liquid composition adjusted to have a specific viscosity, it becomes easy to prepare a food that is packaged in a container that can be used quickly and conveniently.

For example, when a food packaged in a multi-liquid type container is prepared as in the present invention, it is possible to blend a component unstable in water with a liquid composition containing a large amount of an oil and/or fat, or use of an oil and/or fat as a base material of a liquid composition can eliminate heat sterilization, and thus, it is possible to suppress deterioration of components and change in flavor due to heat, hydrolysis due to the presence of moisture, and the like.

In addition, when a food packaged in a multi-liquid type container is prepared as in the present invention, for example, it is possible to reduce a specific component to react with another component and change physical properties. Examples of the change in physical properties include precipitation from a physical properties change caused by a reaction between iron and polyphenol in a fruit juice and/or a reaction between anthocyanin and a hydroxide ion, and gelation caused by a reaction between calcium and pectin. For such a combination of components that is likely to cause a change in physical properties when stored in the same compartment, each component can be separately packaged in a container, whereby the components, physical properties, and flavor of each liquid composition can be stably preserved.

In the present invention, the liquid composition of (a) contains more than 70 wt.% of an oil and/or fat, and the content of the oil and/or fat may be 75 wt.% or more, 80 wt.% or more, 85 wt.% or more, or 90 mass% or more.

As the oil and/or fat to be used in the present invention, edible oils and/or fats can be used without limitation, and for example, vegetable oils and/or fats such as a safflower oil, a palm oil, a coconut oil, a rapeseed oil, a cottonseed oil, a corn oil, a sunflower oil, a soybean oil, and a wheat germ oil can be suitably used, and processed oils and/or fats may also be used. In a preferred aspect of the present invention, the edible oil and/or fat includes a safflower oil, a sunflower oil, or an MCT oil. The MCT oil is also called a medium-chain fatty acid oil, and is characterized in that it is quickly digested and absorbed as compared with general oils and/or fats and is thus less likely to be accumulated in the body.

The liquid composition of (a) may contain an emulsifier, a thickener, an antioxidant, a pH adjuster, a flavoring, an excipient, or the like, in addition to the oil and/or fat. As an additive for thickening, dispersing, and emulsifying, for example, beeswax, silicon dioxide, a glycerin fatty acid ester, or the like may be blended in the liquid composition.

The liquid composition of (a) contains a large amount of oil and/or fat, and thus, the peroxide value thereof is preferably 10 or less, more preferably 8 or less, and even more preferably 6 or less, and may be 4 or less or 2 or less. Lowering the peroxide value of the liquid composition of (a) has an advantage of reducing an odor of oxidative deterioration of the oil.

The liquid composition containing the oil and/or fat may contain an emulsifier, a thickener, an antioxidant, a pH adjuster, a flavoring, an excipient, or the like, in addition to the oil and/or fat. In a case where the base material is not the oil and/or fat, it is possible to omit sterilization by blending a large amount of a saccharide or the like to increase a Brix value (Bx) and decrease a water activity. In this case, the Brix value of the liquid composition may be, for example, from 10 to 50 or from 60 to 90.

In the liquid composition according to the present invention, the viscosity of the liquid composition of (a) is adjusted to 1 to 2000 Pa·s to stably disperse the components and to impart an optimal viscosity for being put on a food or mixed with a beverage after extraction from the container. On the other hand, the viscosity of the liquid composition of (b) is not particularly limited and may be appropriately adjusted depending on the application, but is preferably adjusted to 1 to 2000 Pa·s. The viscosity of the liquid composition according to the present invention can be measured at 21°C by an SV-type (tuning fork vibration type) viscometer, and for example, the viscosity can be 2 mPa·s or more, 3 mPa·s or more, 4 mPa·s or more, 5 mPa·s or more, 6 mPa·s or more, 10 mPa·s or more, 1700 mPa·s or less, 1600 mPa·s or less, 1500 mPa·s or less, 1400 mPa·s or less, 1200 mPa·s or less, 1000 mPa·s or less, 800 mPa·s or less, 500 mPa·s or less, 400 mPa·s or less, or 300 mPa·s or less. The viscosity of the liquid composition according to the present invention is preferably in a range of 4 to 1700 mPa·s, more preferably 5 to 1600 mPa·s, and even more preferably 6 to 1500 mPa·s. When the viscosity is too low, depending on the application, a thick property adequate for being put on a food or mixed with a beverage after extraction from the container may not be obtained. On the other hand, when the viscosity is too high, depending on the application, a satisfactory texture and flavor may not be obtained, or the liquid composition may remain on the bottom or wall surface of the container, which makes it difficult to use up the liquid composition. The viscosities of the plurality of liquid compositions may be the same or different from each other, and for example, the viscosity of one liquid composition may be less than 150 mPa·s, and the viscosity of the other liquid composition may be 150 mPa·s or more. When the viscosity difference between the plurality of liquid compositions is too large, the liquid compositions are less likely to be mixed with each other during use, and thus, for example, the viscosity difference can be less than 1400 Pa·s, and can be less than 1200 Pa·s, less than 1000 Pa·s, less than 700 Pa·s, less than 500 Pa·s, less than 250 Pa·s, less than 200 Pa·s, less than 150 Pa·s, less than 100 Pa·s, less than 50 Pa·s, or less than 20 Pa·s.

The viscosity of the liquid composition may be appropriately adjusted by a known method, and a viscosity modifier such as a surfactant or a thickener can be used. For example, pectin such as LM pectin or HM pectin, carrageenan such as κ-carrageenan, λ-carrageenan, and t-carrageenan, guar gum, xanthan gum, tamarind gum, propylene glycol, carboxymethyl cellulose (CMC), locust bean gum, mannan, inulin, gum arabic, arabinogalactan, gum ghatti, gum karaya, guar gum, psyllium seed gum, gellan gum, tamarind seed gum, alginic acid, sodium alginate, gelatinized starch, hydroxypropyl starch, crosslinked starch phosphate, or the like can be suitably used. When the liquid composition is mixed with a liquid such as water, cow's milk, or alcohol to prepare a beverage, the viscosity and components of the liquid composition may be adjusted in consideration of the components of the diluent to prepare a beverage having an optimal viscosity.

The liquid composition according to the present invention may contain a component that imparts flavor to a food. In a preferred aspect, the liquid composition, particularly the liquid composition of (b), contains, for example, a flavoring, a fruit juice, a roasted plant extract, or the like. As the flavoring, known flavorings can be used without limitation (for example, see Patent Office "Customary Technology Set (Flavoring)", Part II, Food Flavoring). In one aspect, the liquid composition according to the present invention, particularly the liquid composition of (a), can be free of a flavoring or fruit juice, and may be free of an oily flavoring. Here, the oily flavoring is a liquid flavoring obtained by dissolving a flavor base in a vegetable oil or the like, and examples thereof include natural essential oils. Examples of the flavor of the flavoring to be used include the following.
(1) Citrus-based flavors: orange flavor, lemon flavor, lime flavor, grapefruit flavor, Citrus junos flavor, Citrus sudachi flavor, and the like
(2) Berry-based flavors: strawberry flavor, raspberry flavor, blueberry flavor, and the like
(3) Tropical fruit-based flavors: mango flavor, papaya flavor, guava flavor, passion fruit flavor, litchi flavor, and the like
(4) Fruit-based flavors: apple flavor, grape flavor, pineapple flavor, banana flavor, peach flavor, melon flavor, apricot flavor, Prunus mume flavor, cherry flavor, and the like
(5) Tea/coffee-based flavors: green tea flavor, oolong tea flavor, black tea flavor, coffee flavor, and the like
(6) Milk-based flavors: milk flavor, cream flavor, butter flavor, cheese flavor, yogurt flavor, and the like
(7) Meat-based flavors: beef flavor, pork flavor, chicken flavor, and the like
(8) Herb/spice-based flavors: Asafoetida flavor, Ajowan flavor, anise flavor, angelica flavor, fennel flavor, allspice flavor, cinnamon flavor, cassia flavor, chamomile flavor, mustard flavor, cardamom flavor, caraway flavor, cumin flavor, clove flavor, pepper flavor, coriander flavor, sassafras flavor, savory flavor, Japanese pepper flavor, perilla flavor, juniper berry flavor, ginger flavor, star anise flavor, horseradish flavor, sage flavor, thyme flavor, tarragon flavor, dill flavor, capsicum flavor, jujube flavor, nutmeg flavor, basil flavor, parsley flavor, marjoram flavor, rosemary flavor, laurel flavor, Japanese horseradish flavor, and the like
(9) Mint-based flavors: peppermint flavor, spearmint flavor, Japanese peppermint flavor, and the like
(10) Nut-based flavors: almond flavor, cashew nut flavor, peanut flavor, hazelnut flavor, walnut flavor, chess nut flavor, macadamia nut flavor, pecan nut flavor, pistachio flavor, brazil nut flavor, coconut flavor, and the like
(11) Western liquor-based flavors: wine flavor, whiskey flavor, brandy flavor, rum flavor, gin flavor, liqueur flavor, and the like
(12) Cereal-based flavors: sesame flavor, corn flavor, potato flavor, sweet potato flavor, rice flavor, bread flavor, and the like
(13) Sugar-based flavors: honey flavor, maple syrup flavor, sugar flavor, brown sugar flavor, molasses flavor, and the like
(14) Others: cocoa flavor, vanilla flavor, and the like

Examples of the fruit juice include: citrus-based fruit juices such as orange, lemon, lime, grapefruit, Citrus junos, and Citrus sudachi; berry-based fruit juices such as strawberry, raspberry, and blueberry; tropical fruit-based fruit juices such as mango, papaya, guava, passion fruit, and litchi; and fruit juices of apple, grape, pineapple, banana, peach, melon, apricot, Prunus mume, and cherry.

The roasted plant extract means a product obtained by subjecting a raw material plant to roasting treatment and extraction treatment. Examples of plants that can be used as the raw material of the roasted plant (roasted plant product) include: tea leaves belonging to *Camellia sinensis*, such as green tea, black tea, oolong tea, and pu-erh tea; cereals belonging to gramineous plants, legume plants, and plants of the family Polygonaceae, such as adlay, brown rice, barley, and buckwheat; and coffee beans belonging to the genus Coffea of the family Rubiaceae. One roasted plant extract or a plurality of roasted plant extracts may be contained.

The liquid composition according to the present invention may contain general raw materials used for foods and/or beverages, such as a sweetener, an acidulant, a pH adjuster, a preservative, or a colorant. In one aspect, the liquid composition according to the present invention, particularly the liquid composition of (a), may be free of a spice extract. Here, the spice extract is a product obtained by extracting a flavor and a pungent component from various spices using steam distillation or the like, and examples thereof include a ginger extract and a cinnamon extract.

The pH of the liquid composition according to the present invention is not particularly limited, but the pH of the liquid composition of (b) can be, for example, from 1.0 to 7.0, and preferably from 2.0 to 5.0 or 2.5 to 4.0. A method for adjusting the pH is not particularly limited, and for example, a known acidulant or pH adjuster can be used, and the pH can be adjusted to an optimal pH for each liquid composition. Note that the pH of the liquid composition can be measured at 21°C with a pH meter or the like.

A salt equivalent concentration of the liquid composition according to the present invention is preferably less than 1%, and may be from 0.01 to 0.9% or from 0.1 to 0.8%, from the viewpoint of flavor suitability in beverages and food sauces.

In the food in a liquid form packaged in a container according to the present invention, at least one of the liquid compositions may contain a functional ingredient. In the present invention, the term "functional ingredient" means an ingredient that is absorbed into the body to provide various nutritional or health benefits. Examples of such a functional ingredient include ingredients used as active ingredients in foods for special dietary uses, foods with health claims (foods for specified health uses, foods with nutrient function claims), functional foods, nutritional supplements, health supplement foods, nutrition-enriched foods, nutrition-adjusted foods, and supplements. In one aspect, in a case where the functional ingredient is blended in the food, the name of the ingredient and the content per unit food may be displayed as the nutritional ingredient display, or the name of the ingredient and the content per target intake amount per day may be displayed as the display of the function-involving ingredient. Thus, the functional ingredient may be contained as an ingredient in a food such as a fruit juice, but may be separately blended as a preparation or the like.

The functional ingredient according to the present invention may be fat-soluble or water-soluble, and a fat-soluble functional ingredient and a water-soluble functional ingredient can be used in combination.

Examples of the fat-soluble functional ingredient include coenzyme Q 10, curcumin, tocotrienol, testosterone, menthol, a fatty acid, carotenoid, resveratrol, a fat-soluble vitamin, sesamin, α-lipoic acid, saw palmetto extract, Hypericum perforatum (hypericin), royal jelly (decenoate), hesperidin, nobiletin, quercetin, kaempferol, myricitrin, daidzein, glycitein, genistein, myricetin, stilbene, and combinations of two or more thereof. Examples of the fatty acid include highly unsaturated fatty acids (PUFA) such as docosahexaenoic acid (DHA) and eicosapentaenoic acid (EPA), oleic acid, lauric acid, myristic acid, linoleic acid, and palmitic acid. Examples of the carotenoid include α-carotene, β-carotene, lutein, lycopene, astaxanthin, zeaxanthin, cryptoxanthin, fucoxanthin, and xanthophyll, and examples of the fat-soluble vitamin include vitamin A, vitamin D, and vitamin K.

Examples of the water-soluble functional ingredient include anthocyanin, glucosamine, collagen, water-soluble vitamins (vitamin B group, vitamin C, and the like), minerals, amino acids, proteins, peptides, caffeine, catechin, flavonoids other than catechin, polyphenols, and combinations of two or more of these. In addition, a water-insoluble functional ingredient can also be used, and examples thereof include iron, calcium, lactic acid bacteria, bifidobacteria, and combinations of two or more thereof.

The content of the functional ingredient in the liquid composition containing the functional ingredient is not particularly limited, but may be, for example, from 0.001 to 100 wt.%, preferably from 0.01 to 67 wt.%, and more preferably from 0.1 to 35 wt.%, and may be from 1 to 20 wt.%, with respect to the total amount of the liquid composition containing the functional ingredient. The content of the functional ingredient in the liquid composition depends on the type of the functional ingredient, but may be, for example, 3 wt.% or more, 5 wt.% or more, or even 10 wt.% or more.

### Liquid Food Packaged in Container

The food according to the present invention is a food in a liquid form packaged in a multi-liquid type container, and in the present invention, a container capable of individually packaging (individual packaging) a plurality of liquid compositions not to be mixed with another liquid composition is used. In the present invention, any container may be used as long as it can individually package a plurality of liquid compositions, but for example, a container having two or more storage compartments is preferably used. The number of the storage compartments is not particularly limited as long as it is two or more, but the number of the storage compartments is preferably four or less, more preferably three or less, and even more preferably two. The volume of each of the storage compartments is not particularly limited, and can be, for example, from 1 to 50 ml, preferably from 1.5 to 40 ml, and more preferably from 2 to 20 ml. The volumes of the respective storage compartments may be the same or different from each other.

In a preferred aspect, the food in a liquid form packaged in a container of the present invention is for single use and used after two or more liquid compositions filled in the food storage compartments are mixed. Although the food in a liquid form packaged in a container can be directly eaten, in a preferred aspect, the food in a liquid form packaged in a container according to the present invention is ingested after the two or more liquid compositions filled in the storage compartments are put on a food, and in this case, the liquid compositions filled in the storage compartments are typically edible sauces. The food on which the food in a liquid form packaged in a container is put is not particularly limited as long as it is a food, and examples thereof include yogurt, ice cream, shaved ice, pudding, jelly, pancake, crepe, rice cake, cracker, cheese, bread, salad, marinade, and pasta.

In another preferred aspect, the food in a liquid form packaged in a container according to the present invention is a concentrated (type) beverage which is drunk by mixing the two or more liquid compositions filled in the storage compartments with another liquid. The diluent for diluting the concentrated beverage is not particularly limited, and not only water but also carbonated water, an aqueous alcohol (ethanol) solution, milk such as cow's milk, soy milk, or the like can be suitably used. In particular, cow's milk contains a lot of nutrients, and has an effect of making the strange taste derived from the functional ingredient mild and easy to drink, and thus, by diluting with cow's milk, a tastier and healthier beverage can be provided. A dilution ratio when the food in a liquid form packaged in a container according to the present invention is diluted with the diluent is not particularly limited, but is preferably from 2.0 to 20.0 times, more preferably from 3.0 to 15.0 times, and even more preferably from 4.0 to 12.0 times. In a case where a beverage is prepared from the food in a liquid form packaged in a container according to the present invention, the beverage may be an alcoholic beverage or a non-alcoholic beverage.

In the present invention, by blending a component corresponding to a diluent in the liquid composition, a property of the beverage can be adjusted when the liquid food and the diluent are mixed. For example, if LM pectin is blended in the liquid composition to form a gel with a divalent metal ion such as calcium, the viscosity increases when diluted with cow's milk, and a texture like a smoothie can be obtained. HM pectin is gelled in the presence of an acid or a sugar, and thus, if HM pectin is blended in the liquid composition, the viscosity of a beverage can be changed by mixing a liquid containing an acid or a sugar. The viscosity of the beverage prepared by diluting the food in a liquid form packaged in a container according to the present invention with a diluent is not particularly limited, and the beverage may be a low-viscosity beverage or a high-viscosity beverage such as a smoothie. The viscosity of the beverage when it is drunk may be, for example, from 0.5 to 100 mPa·s or from 1 to 60 mPa·s, and may be from 0.5 to 10 mPa·s or from 20 to 60 mPa·s depending on the type of the beverage.

The container used in the present invention is not particularly limited in terms of a material, a shape, and the like as long as it can individually package a plurality of liquid compositions. As the material of the container, any of materials usually used for beverage containers, such as metal containers such as aluminum cans and steel cans, resin-made containers such as a PET bottle, a glass bottle, and a paper container, can be used. In a preferred aspect, the container according to the present invention is made of a resin, and examples thereof include a small-capacity portion pack (DISPEN PAK JAPAN CO., INC.), a two compartment COSMO PACK (KANAE CO., LTD.), a two compartment type packaging for preparation in use (JOY-PACK blister type, KANAE CO., LTD.), and a partition-breaking small chamber packaging sachet (KOMACK CO., LTD.). In a preferred aspect, the food in a liquid form packaged in a container according to the present invention can simultaneously release a plurality of liquid compositions by one action.

In the food in a liquid form packaged in a container according to the present invention, in a case of a liquid composition requiring heat sterilization, the liquid composition may be filled in a container after heat sterilization, or may be heat-sterilized after being filled in a container. Alternatively, only a part of the plurality of liquid compositions may be heat-sterilized. In the present invention, an aspect in which aseptic filling may be performed at a low temperature or the like may be adopted. Conditions for heat sterilization are not particularly limited, and for example, a treatment defined in the Food Sanitation Act may be performed. Specifically, the heat sterilization may be performed at 60 to 150°C, preferably 90 to 150°C, and more preferably 110 to 150°C, for 1 second to 60 minutes, and preferably 1 second to 30 minutes. Retort sterilization (for example, heat sterilization at 121°C for 7 minutes while appropriately pressurizing) may be performed in a case of a canned beverage, and UHT sterilization (for example, holding a beverage composition at 120 to 150°C for 1 second to several tens of seconds) may be performed in a case of a resin-made container, but hot pack, membrane sterilization, or the like may be used as necessary. For example, in the case of retort sterilization, the treatment can be performed under conditions of about 10 to 30 minutes at 110 to 130°C, and preferably about 10 to 20 minutes at 120 to 125°C, and in the case of UHT sterilization, the treatment can be performed under conditions of about 1 to 120 seconds at 120 to 150°C, and preferably about 30 to 120 seconds at 130 to 145°C. To prevent unintended mixing or contamination before filling, a sterilization step in the production of the food packaged in a container of the present invention is preferably performed individually for each of the liquid compositions to be filled in the respective storage compartments, and this can minimize deterioration of the functional ingredient and the flavor until a filling step.

The food in a liquid form packaged in a container of the present invention can be produced by a production process including, for example, a step of preparing two or more liquid compositions and a step of filling the prepared two or more liquid compositions in separate storage compartments. In addition, the order of the steps can be changed, or a new step can be added as appropriate. For example, a sterilization step can be provided, or a step of removing residues or the like by filtration or the like can be inserted.

The food in a liquid form packaged in a container according to the present invention has at least two liquid compositions to be filled, which are different from each other in composition. The liquid composition according to the present invention refers to a liquid composition adjusted for the purpose of being edible. In preparation of the liquid composition, a known mixing apparatus such as a paddle mixer, a homomixer, or as necessary, a high-pressure homomixer can be freely used.

Hereinafter, the present invention will be described in more detail with reference to specific examples, but the present invention is not limited to the following examples. In addition, unless otherwise specified in the present specification, concentrations and the like are based on mass (weight), and numerical ranges are described as including their endpoints.

### Examples

### Evaluation Method

### (1) pH

The pH of the liquid composition was measured at 21°C.

### (2) Salt Concentration

A sodium content of a sample obtained by a dilute acid extraction method was measured by an atomic absorption method, and a salt concentration was calculated by multiplying the measured value by a predetermined coefficient (2.54).

### (3) Peroxide Value

Measurement was performed by an acetic acid-chloroform method. First, the liquid composition was dissolved in a mixed solution of chloroform and acetic acid (2:3), and nitrogen purge was performed. Then, a saturated potassium iodide solution was added to allow a reaction to proceed at room temperature in the dark, followed by addition of water for permeation, and titration was performed with a sodium thiosulfate standard solution (0.01 mol/L) using a 1% starch solution as an indicator.

### Production Example 1: Smoothie (Banana Flavor)

Liquid A and Liquid B were prepared according to the formulations presented in the following table. Liquid A was adjusted by mixing a functional ingredient (DHA), which is a kind of highly unsaturated fatty acid and has been reported to have an anticoagulant effect and a neutral fat lowering effect, with other raw materials to be 1 L. A safflower oil (The Nisshin OilliO Group, Ltd., Nisshin Ichiban Shibori Safflower oil) was used as an edible oil and/or fat serving as the base material of Liquid A. Liquid B was adjusted by adding sugar and a thickener (LM pectin) to water, stirring the mixture at 80°C for 10 minutes, and then adding the remaining raw materials to the mixture to be 1 L (salt concentration: 0.1%). Liquid A was not sterilized, Liquid B was sterilized at 93°C for 30 seconds, and 3 mL of Liquid A and 10 mL of Liquid B were filled in a resin-made container having two liquid storage compartments (the distance between opening portions of the liquid storage compartments was 1 cm) after nitrogen substitution, and the container was sealed to produce a food in a liquid form packaged in a container for single use (peroxide value of Liquid A: 1.2 meq/kg). Note that the viscosity of Liquid B at 21°C was measured by an SV type viscometer and found to be about 240 mPa·s.

The food packaged in the container thus produced was opened in one action and placed in a cup, and 120 mL of cow's milk was added thereto and stirred to prepare a smoothie-like beverage (SV viscosity: about 5 mPa·s). Although DHA is fat-soluble and easily oxidized, it was possible to conveniently obtain a tasty beverage when the food was prepared as the food packaged in a two-pack type container as in the present invention.

**[Table 1]**

| Liquid A (oil and/or fat content: 100%, viscosity: about 70 mPas) | | |
|---|---|---|
| Item name | Blending amount | |
| Functional ingredient (DHA) | G | 182 |
| Antioxidant (vitamin E) | G | 27 |
| Viscosity modifier (glycerin fatty acid ester) | G | 10 |
| Base material (safflower oil) | G | Remainder |
| Final amount | L | 1 |

| Liquid B (pH: about 3.8, viscosity: about 240 mPas) | | |
|---|---|---|
| Item name | Blending amount | |
| Concentrated clarified banana juice (2-fold concentrated) | G | 38 |
| Sugar | G | 450 |
| High-intensity sweetener (e.g., sucralose) | G | 3 |
| pH adjuster (e.g., citric acid) | G | 4 |
| Thickener (LM pectin) | G | 20 |
| Banana flavoring | mL | 25 |
| Water | L | Remainder |
| Final amount | L | 1 |

### Production Example 2: Smoothie (Strawberry Flavor)

Liquid A and Liquid B were prepared according to the formulations presented in the following table. Liquid A was adjusted by mixing functional ingredients (DHA and EPA), which are kinds of highly unsaturated fatty acids and have been reported to have an anticoagulant effect and a neutral fat lowering effect, with other raw materials to be 1 L. A sunflower oil (Showa Sangyo Co., Ltd., Olein-rich premium healthy sunflower oil) was used as the edible oil and/or fat serving as the base material of Liquid A. Liquid B was adjusted by adding sugar and a thickener (LM pectin) to water, heating and stirring the mixture at 80°C for 10 minutes, and then adding the remaining ingredients to the mixture to be 1 L (salt concentration: 0.6%). Liquid A was not sterilized, Liquid B was sterilized at 93°C for 30 seconds, and 3 mL of Liquid A and 10 mL of Liquid B were filled in a resin-made container having two liquid storage compartments (the distance between opening portions of the liquid storage compartments was 1 cm) after nitrogen substitution, and the container was sealed to produce a food in a liquid form packaged in a container for single use. Note that the viscosity of Liquid A at 21°C was measured by using an SV type viscometer, and it was about 70 mPa·s.

The food packaged in the container thus produced was opened in one action and placed in a cup, and 120 mL of cow's milk was added thereto and stirred to prepare a smoothie-like beverage (SV viscosity: about 5 mPa·s). Although DHA and EPA are fat-soluble and easily oxidized, it was possible to conveniently obtain a tasty beverage when the food was prepared as the food packaged in a two-pack type container as in the present invention.

**[Table 2]**

| Liquid A (oil and/or fat content: 100%, viscosity: about 70 mPas) | | |
|---|---|---|
| Item name | Blending amount | |
| Functional ingredient (DHA) | G | 182 |
| Functional ingredient (EPA) | G | 119 |
| Antioxidant (vitamin E) | G | 27 |
| Viscosity modifier (glycerin fatty acid ester) | G | 10 |
| Base material (sunflower oil) | G | Remainder |
| Final amount | L | 1 |

| Liquid B (pH: about 3.8, viscosity: about 230 mPas) | | |
|---|---|---|
| Item name | Blending amount | |
| Clarified strawberry juice (4-fold concentrated) | G | 22 |
| Sugar | G | 450 |
| High-intensity sweetener (e.g., sucralose) | G | 3 |
| pH adjuster (e.g., citric acid) | G | 3 |
| Thickener (LM pectin) | G | 20 |
| Strawberry flavoring | mL | 25 |
| Water | L | Remainder |
| Final amount | L | 1 |

### Production Example 3: Smoothie (Blueberry Flavor)

Liquid A and Liquid B were prepared according to the formulations presented in the following table. Liquid A was adjusted by mixing a functional ingredient (Bifidobacterium), which is a kind of lactic acid bacteria and has been reported to have an intestine-regulating effect and the like as a good bacterium, with other raw materials to be 1 L. A wheat germ oil (Summit oil mill) was used as the edible oil and/or fat serving as the base material of Liquid A. Liquid B was adjusted by adding sugar and a thickener (LM pectin) to water, heating and stirring the mixture at 80°C for 10 minutes, and then adding the remaining ingredients to the mixture to be 1 L. Liquid A was not sterilized, Liquid B was sterilized at 93°C for 30 seconds, and 3 mL of Liquid A and 10 mL of Liquid B were filled in a resin-made container having two liquid storage compartments (the distance between opening portions of the liquid storage compartments was 1 cm) after nitrogen substitution, and the container was sealed to produce a food in a liquid form packaged in a container for single use. Note that the viscosity of Liquid A at 21°C was measured by using an SV type viscometer, and it was about 90 mPa·s.

The food packaged in the container thus produced was opened in one action and placed in a cup, and 120 mL of cow's milk was added thereto and stirred to prepare a smoothie-like beverage (SV viscosity: about 5 mPa·s). In general, bifidobacteria are unstable to heat and oxygen, but it was possible to conveniently obtain a tasty food when the food was prepared as the food packaged in a two-pack type container as in the present invention.

**[Table 3]**

| Liquid A (oil and/or fat content: 98%, viscosity: about 90 mPas) | | |
|---|---|---|
| Item name | Blending amount | |
| Functional ingredient (Bifidobacterium powder) | G | 16 |
| Antioxidant (vitamin E) | G | 27 |
| Viscosity modifier (glycerin fatty acid ester) | G | 10 |
| Base material (wheat germ oil) | G | Remainder |
| Final amount | L | 1 |

| Liquid B (pH: about 3.8, viscosity: about 210 mPas) | | |
|---|---|---|
| Item name | Blending amount | |
| Sugar | G | 450 |
| High-intensity sweetener (e.g., sucralose) | G | 3 |
| pH adjuster (e.g., citric acid) | G | 3 |
| Thickener (LM pectin) | G | 15 |
| Blueberry flavoring | mL | 25 |
| Water | L | Remainder |
| Final amount | L | 1 |

### Production Example 4: Smoothie (Grape Flavor)

Liquid A and Liquid B were prepared according to the formulations presented in the following table. Liquid A was adjusted by mixing iron (ferric pyrophosphate), which is a functional ingredient that is likely to be insufficiently ingested, with other raw materials to be 1 L. A wheat germ oil (Summit oil mill) was used as the edible oil and/or fat serving as the base material of Liquid A. Liquid B was adjusted by adding sugar and a thickener (HM pectin) to water, heating and stirring the mixture at 80°C for 10 minutes, and then adding the remaining ingredients to the mixture to be 1 L. Liquid A was not sterilized, Liquid B was sterilized at 93°C for 30 seconds, and 3 mL of Liquid A and 10 mL of Liquid B were filled in a resin-made container having two liquid storage compartments (the distance between opening portions of the liquid storage compartments was 1 cm) after nitrogen substitution, and the container was sealed to produce a food in a liquid form packaged in a container for single use.

The food packaged in the container thus produced was opened in one action and placed in a cup, and 120 mL of cow's milk was added thereto and stirred to prepare a smoothie-like beverage (SV viscosity: about 5 mPa·s). In general, ferric pyrophosphate is hardly soluble in water and easily precipitates with polyphenol in a fruit juice, but it was possible to conveniently obtain a tasty food when the food was prepared as the food packaged in a two-pack type container as in the present invention.

**Table 4**

| Liquid A (oil and/or fat content: 99.4%, viscosity: about 90 mPas) | | |
|---|---|---|
| Item name | Blending amount | |
| Functional ingredient (iron pyrophosphate) | G | 6 |
| Antioxidant (vitamin E) | G | 27 |
| Viscosity modifier (glycerin fatty acid ester) | G | 10 |
| Base material (wheat germ oil) | G | Remainder |
| Final amount | L | 1 |

| Liquid B (pH: about 3.8, viscosity: about 230 mPas) | | |
|---|---|---|
| Item name | Blending amount | |
| Turbid grape juice (6-fold concentrated) | G | 15 |
| Sugar | G | 450 |
| High-intensity sweetener (e.g., sucralose) | G | 3 |
| pH adjuster (e.g., citric acid) | G | 3 |
| Thickener (HM pectin) | G | 20 |
| Grape flavoring | mL | 25 |
| Water | L | Remainder |
| Final amount | L | 1 |

### Production Example 5: Smoothie (Black Sesame Flavor)

Liquid A and Liquid B were prepared according to the formulations presented in the following table. Liquid A was adjusted by mixing calcium (calcium chloride), which is a functional ingredient that is likely to be insufficiently ingested, with other raw materials to be 1 L. Wheat germ oil (Summit oil mill) was used as the edible oil and/or fat serving as the base material of Liquid A. Liquid B was adjusted by adding sugar and a thickener (HM pectin) to water, heating and stirring the mixture at 80°C for 10 minutes, and then adding the remaining raw materials to the mixture to be 1 L (salt concentration: 0.1%). Liquid A was not sterilized, Liquid B was sterilized at 93°C for 30 seconds, and 3 mL of Liquid A and 10 mL of Liquid B were filled in a resin-made container having two liquid storage compartments (the distance between opening portions of the liquid storage compartments was 1 cm) after nitrogen substitution, and the container was sealed to produce a food in a liquid form packaged in a container for single use.

The food packaged in the container thus produced was opened in one action and placed in a cup, and 120 mL of cow's milk was added thereto and stirred to prepare a smoothie-like beverage (SV viscosity: about 7 mPa·s). In general, calcium is likely to react with a thickener such as pectin, but it was possible to conveniently obtain a tasty food when the food was prepared as the food packaged in a two-pack type container as in the present invention.

**Table 5**

| Liquid A (oil and/or fat content: 99.4%, viscosity: about 90 mPas) | | |
|---|---|---|
| Item name | Blending amount | |
| Functional ingredient (calcium chloride) | G | 6 |
| Antioxidant (vitamin E) | G | 27 |
| Viscosity modifier (glycerin fatty acid ester) | G | 10 |
| Base material (wheat germ oil) | G | Remainder |
| Final amount | L | 1 |

| Liquid B (pH: about 3.8, viscosity: about 210 mPas) | | |
|---|---|---|
| Item name | Blending amount | |
| Sugar | G | 450 |
| High-intensity sweetener (e.g., sucralose) | G | 3 |
| pH adjuster (e.g., citric acid) | G | 3 |
| Thickener (HM pectin) | G | 20 |
| Black sesame flavoring | mL | 25 |
| Water | L | Remainder |
| Final amount | L | 1 |

### Production Example 6: Smoothie (Sesame & "Kinako," Roasted Soybean Flour Flavor)

Liquid A and Liquid B were prepared according to the formulations presented in the following table. Liquid A was adjusted by mixing a fat-soluble functional ingredient (sesamin) with other ingredients to be 1 L. An MCT oil (The Nisshin OilliO Group, Ltd., Nisshin MCT oil) was used as the edible oil and/or fat serving as the base material of Liquid A. Liquid B was adjusted by adding sugar and a thickener to water, stirring the mixture at 80°C for 10 minutes, and then adding the remaining raw materials to the mixture to be 1 L (salt concentration: 0.1%). Liquid A was not sterilized, Liquid B was sterilized at 93°C for 30 seconds, and 3 mL of Liquid A and 10 mL of Liquid B were filled in a resin-made container having two liquid storage compartments (the distance between opening portions of the liquid storage compartments was 1 cm) after nitrogen substitution, and the container was sealed to produce a food in a liquid form packaged in a container for single use. Note that the viscosity of Liquid A at 21°C was measured by using an SV type viscometer, and it was about 100 mPa·s.

The food packaged in the container thus produced was opened in one action and placed in a cup, and 120 mL of cow's milk was added thereto and stirred to prepare a smoothie-like beverage (SV viscosity: about 5 mPa·s). Although sesamin is fat-soluble and easily oxidized, it was possible to conveniently obtain a tasty food when the food was prepared as the food packaged in a two-pack type container as in the present invention.

**Table 6**

| Liquid A (oil and/or fat content: 99.6%, viscosity: about 100 mPas) | | |
|---|---|---|
| Item name | Blending amount | |
| Functional ingredient (sesamin) | G | 4 |
| Antioxidant | G | 20 |
| Viscosity modifier (glycerin fatty acid ester) | G | 50 |
| Base material (MCT oil) | G | Remainder |
| Final amount | L | 1 |

| Liquid B (pH: about 3.4, viscosity: about 90 mPas) | | |
|---|---|---|
| Item name | Blending amount | |
| Roasted soybean flour (Kinako) | G | 1.0 |
| Sugar | G | 450 |
| High-intensity sweetener (e.g., sucralose) | G | 3.00 |
| pH adjuster (e.g., citric acid) | G | 4.00 |
| Thickener (carrageenan) | G | 10.0 |
| Sesame flavoring | mL | 10.0 |
| Water | L | Remainder |
| Final amount | L | 1 |

### Production Example 7: Edible Sauce (Strawberry Flavor)

Liquid A and Liquid B were prepared according to the formulations presented in the following table. Liquid A was adjusted by mixing functional ingredients (DHA and EPA), which are kinds of highly unsaturated fatty acids and have been reported to have an anticoagulant effect and a neutral fat lowering effect, with other raw materials to be 1 L. A sunflower oil (Showa Sangyo Co., Ltd., Olein-rich premium healthy sunflower oil) was used as the edible fat and oil serving as the base material of Liquid A. Liquid B was adjusted by adding sugar and a thickener (HM pectin) to water, stirring the mixture at 80°C for 10 minutes, and adding the remaining ingredients to the mixture to be 1 L (salt concentration: 0.6%). Liquid A was not sterilized, Liquid B was sterilized at 93°C for 30 seconds, and 3 mL of Liquid A and 10 mL of Liquid B were filled in a resin-made container having two liquid storage compartments (the distance between opening portions of the liquid storage compartments was 1 cm) after purged with nitrogen, and the container was sealed to produce a food in a liquid form packaged in a container for single use. Note that the viscosity at 21°C was measured using an SV type viscometer, and the viscosity of Liquid A was about 70 mPa·s, and the viscosity of Liquid B was about 230 mPa·s.

The food packaged in the container thus produced was opened in one action and used as an edible sauce by being put on 200 mL of yoghurt. Although DHA and EPA are fat-soluble and easily oxidized, it was possible to conveniently obtain a tasty food when the food was prepared as the food packaged in a two-pack type container as in the present invention.

**Table 7**

| Liquid A (oil and/or fat content: 100%, viscosity: about 70 mPas) | | |
|---|---|---|
| Item name | Blending amount | |
| Functional ingredient (DHA) | G | 182 |
| Functional ingredient (EPA) | G | 119 |
| Antioxidant (vitamin E) | G | 27 |
| Viscosity modifier (glycerin fatty acid ester) | G | 10 |
| Base material (sunflower oil) | G | Remainder |
| Final amount | L | 1 |

| Liquid B (pH: about 3.8, viscosity: about 230 mPas) | | |
|---|---|---|
| Item name | Blending amount | |
| Clarified strawberry juice (4-fold concentrated) | G | 22 |
| Sugar | G | 450 |
| High-intensity sweetener (e.g., sucralose) | G | 3 |
| pH adjuster (e.g., citric acid) | G | 3 |
| Thickener (HM pectin) | G | 4 |
| Strawberry flavoring | mL | 25 |
| Water | L | Remainder |
| Final amount | L | 1 |

### Production Example 8: Edible Sauce (Blueberry Flavor)

Liquid A and Liquid B were prepared according to the formulations presented in the following table. Liquid A was adjusted by mixing a functional ingredient (Bifidobacterium), which is a kind of lactic acid bacteria and has been reported to have an intestine-regulating effect and the like as a good bacterium, with other raw materials to be 1 L. A wheat germ oil (Summit oil mill) was used as the edible oil and/or fat serving as the base material of Liquid A. Liquid B was adjusted by adding sugar and a thickener (HM pectin) to water, heating and stirring the mixture at 80°C for 10 minutes, and adding the remaining ingredients to the mixture to be 1 L. Liquid A was not sterilized, Liquid B was sterilized at 93°C for 30 seconds, and 3 mL of Liquid A and 10 mL of Liquid B were filled in a resin-made container having two liquid storage compartments (the distance between opening portions of the liquid storage compartments was 1 cm) after purged with nitrogen, and the container was sealed to produce a food in a liquid form packaged in a container for single use. Note that the viscosity of Liquid A at 21 °C was measured by using an SV type viscometer, and it was about 90 mPa·s.

The food packaged in the container thus produced was opened in one action and used as an edible sauce by being put on pancake. In general, bifidobacteria are unstable to heat and oxygen, but it was possible to conveniently obtain a tasty food when the food was prepared as the food packaged in a two-pack type container as in the present invention.

**Table 8**

| Liquid A (oil and/or fat content: 98%, viscosity: about 90 mPas) | | |
|---|---|---|
| Item name | Blending amount | |
| Functional ingredient (Bifidobacterium powder) | G | 16 |
| Antioxidant (vitamin E) | G | 27 |
| Viscosity modifier (glycerin fatty acid ester) | G | 10 |
| Base material (wheat germ oil) | G | Remainder |
| Final amount | L | 1 |

| Liquid B (pH: about 3.8, viscosity: about 210 mPas) | | |
|---|---|---|
| Item name | Blending amount | |
| Sugar | G | 450 |
| High-intensity sweetener (e.g., sucralose) | G | 3 |
| pH adjuster (e.g., citric acid) | G | 3 |
| Thickener (HM pectin) | G | 4 |
| Blueberry flavoring | mL | 25 |
| Water | L | Remainder |
| Final amount | L | 1 |

### Production Example 9: Edible Sauce (Strawberry Flavor)

Liquid A and Liquid B were prepared according to the formulations presented in the following table. Liquid A was adjusted by mixing a fat-soluble functional ingredient (Vitamin D) with other raw materials to form 1 kg. Oleogel (ADEKA CORPORATION, Box Oil sp) was used as the edible oil and/or fat serving as the base material of Liquid A. Liquid B was adjusted by adding sugar and a thickener (HM pectin) to water, heating and stirring the mixture at 80°C for 10 minutes, and adding the remaining ingredients to the mixture to be 1 L (salt concentration: 0.6%). Liquid A was not sterilized, Liquid B was sterilized at 93°C for 30 seconds, and 3 mL of Liquid A and 10 mL of Liquid B were filled in a resin-made container having two liquid storage compartments (the distance between opening portions of the liquid storage compartments was 1 cm) after purged with nitrogen, and the container was sealed to produce a food in a liquid form packaged in a container for single use. Note that the viscosity at 21°C was measured using an SV type viscometer, and the viscosity of Liquid A was about 1570 mPa·s, and the viscosity of Liquid B was about 230 mPa·s.

The food packaged in the container thus produced was opened in one action and used as an edible sauce by being put on pancake. In general, vitamin D is unstable to heat and oxygen, but it was possible to conveniently obtain a tasty food when the food was prepared as the food packaged in a two-pack type container as in the present invention.

**[Table 9]**

| Liquid A (oil and/or fat content: 80%, viscosity: about 1570 mPa. S) | | |
|---|---|---|
| Item name | Blending amount | |
| Functional ingredient (vitamin D) | G | 0.002 |
| Viscosity modifier (glycerin fatty acid ester) | G | 10 |
| Fructose glucose liquid sugar | G | 200 |
| Base material (oleogel) | G | Remainder |
| Final amount | KG | 1 |

| Liquid B (pH: about 3.8, viscosity: about 230 mPas) | | |
|---|---|---|
| Item name | Blending amount | |
| Clarified strawberry juice (4-fold concentrated) | G | 22 |
| Sugar | G | 450 |
| High-intensity sweetener (e.g., sucralose) | G | 3 |
| pH adjuster (e.g., citric acid) | G | 3 |
| Thickener (HM pectin) | G | 4 |
| Strawberry flavoring | mL | 25 |
| Water | L | Remainder |
| Final amount | L | 1 |

## Claims

1. A food in a liquid form packaged in a container, the food comprising:
(a) a liquid composition containing more than 70 wt.% of an oil and/or fat; and
(b) a liquid composition, different from the liquid composition of (a) set forth above, having a viscosity from 1 to 2000 mPa·s,
wherein each of the liquid compositions is individually packaged.

2. The food according to claim 1, wherein the food is a beverage.

3. The food according to claim 1 or 2, wherein the food is a concentrated beverage to be diluted for consumption.

4. The food according to claim 1 or 2, which is a single-use food.

5. The food according to claim 1 or 2, wherein the container is configured to release the liquid compositions of (a) and (b) simultaneously from the container.

6. The food according to claim 1 or 2, wherein the container comprises at least two or more liquid storage compartments configured to store the liquid compositions of (a) and (b).

7. The food according to claim 6, wherein a volume of each of the liquid storage compartments is 50 mL or less.

8. The food according to claim 1 or 2, wherein a liquid ratio (a)/(b) is from 0.1 to 10.

9. The food according to claim 1 or 2, wherein (a) comprises a safflower oil, a sunflower oil, or an MCT oil.

10. The food according to claim 1 or 2, wherein (a) comprises a glycerin fatty acid ester.

11. The food according to claim 1 or 2, wherein a viscosity of (a) is from 1 to 2000 mPa·s.

12. The food according to claim 1 or 2, wherein a peroxide value of (a) is 10 or less.

13. The food according to claim 1 or 2, wherein the liquid composition of (b) comprises a flavoring and/or a fruit juice.

14. The food according to claim 1 or 2, wherein a pH of (b) is 4 or less.
